# EUROPEAN PATENT APPLICATION

(11) **EP 2 796 491 A1**
(43) Date of publication of application: **29.10.2014**
(21) Application number: 13165594.6
(22) Date of filing: 26.04.2013
(51) Int. Cl.: C08J 11/28, C08K 5/29, C08K 5/3442

(54) **Composition for devulcanization of sulfur-cured rubber and method of devulcanization using this composition**

(71) Applicant: Vorobyev, Leonid, Walnut Creek, CA 94597 (US)
(72) Inventor: Vorobyev, Leonid, Walnut Creek, CA 94597 (US)
(74) Representative: Anohins, Vladimirs

(57) **Abstract**

This invention relates to a composition for devulcanization of sulfur-cured rubber and a method of devulcanization of sulfur-cured rubber, and can be used to recycle used rubber articles. A composition for devulcanization of sulfur-cured rubber, which contains a devulcanizing agent for the selective destruction of sulfide bonds according to this invention, has a secondary imine as a devulcanizing agent. Further, it contains a compatibilizer compatible with both the secondary imine and the sulfur-cured rubber, at a weight ratio of the secondary imine to the compatibilizer from 1:9 to 1:20. Secondary imines break sulfide bonds in sulfur-cured rubber very effectively and selectively, while the experimentally selected compatibilizer ensures an effective penetration of the secondary imines into the rubber crumbs. As a consequence, the required concentration of secondary imines in the resulting compounded rubber does not exceed 1% (preferably, 0.1-0.5%).

## Description

This invention relates to a composition for devulcanization of sulfur-cured rubber and the method of devulcanization using this composition. It can be used to recycle used rubber articles.

Conventional sulfur vulcanization of rubber leads to crosslinking of crude rubber macromolecules by sulfide (C-S) and disulfide (S-S) bonds. To reuse this vulcanized rubber while maximally keeping mechanical and other properties of the produced secondary rubber, those sulfide and disulfide bonds (further both called simply sulfide bonds) have to be broken. At the same time, C-C bonds of the main polymer chain have to be kept intact to the highest extent possible.

There are several known methods of rubber devulcanization. For example, Patent US6380269 offers a thermal devulcanization of rubber at 150-300°C and under an elevated pressure. Under these conditions, vulcanized rubber liquifies, allowing its further usage. However, as a result of significant destruction of the main polymer chains, the molecular weight drops several times. This leads to a 3-10 times decrease in the values of many mechanical properties, primarily tensile strength and tear resistance.

There is another known method of rubber devulcanization using microwave heating of rubber (Patent US4104205), but this approach has all the deficiencies of strongly overheating sulfur-cured rubber.

Inventor's certificates SU526632 and SU1620454, Patent EP1242520, and Patent US6831109 all employ a principally different approach. They use chemical devulcanizing agents that cause a preferred break of sulfide bonds. This is done under moderate heating (30-50°C) and intense shear by passing sulfur-cured rubber (usually in the form of rubber crumbs) through a 2-roll mill.

The USSR inventor's certificate SU526632 discloses the use of mercaptanes, zinc salts of mercaptanes, disulfides, primary and secondary amines as devulcanizing agents. The USSR inventor's certificate SU1620454 describes the use of the composition consisting of 2-mercaptobenzothiazole, urotropine, and iron stearate as a devulcanizing agent (called there "activator of regeneration"). The Patent EP1242520 discloses the use of a composition including urea or derivatives of urea and organic diacid as a devulcanizing agent.

All of the above-mentioned devulcanizing agents (individual chemicals or compositions) selectively break sulfide bonds, while minimally affecting C-C bonds. This saves the molecular weight of the polymer much better than thermal devulcanization does. However, amines, mercaptanes, urea and its derivatives, and other mentioned substances, while breaking sulfide bonds, also activate vulcanization. Since effective devulcanization requires the addition of significant amounts of the mentioned substances (1% or more), all of these approaches lead to a high tendency for scorching of secondary compounded rubber. This significantly complicates rubber processing. Fast scorching results in a big increase of viscosity, followed by the premature crosslinking of macromolecules. As a consequence of early scorching, it becomes difficult or impossible to achieve necessary shapes and properties of products.

Usually, scorching time is defined as the time necessary for a 5% increase of compounded rubber viscosity at 120°C. Rubber technologists consider scorching time of at least 8 minutes as normal. However, addition of the above-mentioned devulcanizing agents results in a scorching time of no more than 6 minutes.

Besides, the mechanical properties of the secondary rubbers without added crude rubber in the above-mentioned patents are 40-70% lower than corresponding properties of standard primary rubbers - for example, in the Patent EP1242520.

A technical problem to be solved by the present invention is the effective devulcanization of used rubber articles, while maximally keeping mechanical properties of rubber, and producing compounded rubber with properties (primarily scorching times) that are technologically acceptable in regular rubber production.

According to the present invention, the composition for devulcanization of sulfur-cured rubber contains a secondary imine as a devulcanizing agent for selective destruction of sulfide bonds. Additionally, the composition contains a compatibilizer (having good compatibility with both polar secondary imine and low polar rubber) at a weight ratio of secondary imine to compatibilizer from 1:9 to 1:20. Secondary imines break sulfide bonds in sulfur-cured very effectively and selectively. The role of the compatibilizer in this composition is to help the secondary imine to penetrate into rubber crumbs. High-boiling products of petroleum distillation, comprising a complex mixture of hydrocarbons (primarily alkylaromatic), are well compatible with secondary imines. At the same time, they are compatible with rubber crumbs, which are mostly based on polyisoprene, polybutadiene, and other low polar rubbers. As a result, the composition of invention can penetrate into rubber crumbs relatively easily, resulting in the effective and uniform devulcanization of sulfur-cured rubber.

Preferably, the devulcanizing agent is selected from secondary imines, which are the Schiff reaction derivatives of aliphatic or aromatic mono- or di-primary amines and aliphatic or aromatic mono- or di-aldehydes. Examples of s u c h c o m p o u n d s a r e 1 , 5-diazabicyclo[4.3.0]non-5-ene, 1,8-diazabicyclo[5.4.0]undec-7-ene, bis[4-(2-hydroxy-3-methoxy-benzylideneamino)phenyl] ether, N-benzylideneaniline, N-ethyl-1-phenylmethaneimine, etc.

Preferably, the compatibilizer is selected from petroleum-based aromatic oils. The compatibilizer may be chosen from products of petroleum distillation with boiling temperatures exceeding 250°C, in order to minimize the evaporation of compatibilizer in the technological process.

The claimed method of devulcanization of sulfur-cured rubber includes the mixing of the claimed composition for devulcanization of rubber with rubber crumbs at a weight ratio of the composition to rubber crumbs from 1:9 to 1:50, followed by extrusion of this mixture at 30-100°C. Secondary imines break sulfide bonds of sulfur-cured rubber very effectively and selectively, while the experimentally selected compatibilizer ensures effective penetration of secondary imines into rubber crumbs. As a consequence, the required concentration of secondary imines in the resulting compounded rubber does not exceed 1% (preferably, 0.1-0.5%). The scorching time of the compounded rubber at that low secondary imine concentration is 8-15 minutes. This quite satisfies the technological requirements for most rubber processing technologies.

The heating and shear during extrusion contribute to the penetration of the claimed composition into rubber crumbs, significantly easing and accelerating the process of devulcanization. The material after extrusion can be used for the production of rubber articles "as is" or in combination with the standard compounded rubbers.

Devulcanized rubber crumbs are 100% soluble (except carbon black) in toluene, confirming the high effectiveness of devulcanization. The properties of the test samples (made from compounded rubber based on devulcanized rubber crumbs) are close to the properties of the original rubbers. This proves high selectivity of devulcanization, that kept properties at 70-90% of those of the original. The tear resistance was especially high, reaching 60-80 kN/m, which equals and even exceeds this parameter for original rubbers.

The following are specific examples of implementation of the present invention, which are preferable but not the only possible.

### Example 1.

0.5 kg of 1,5-diazabicyclo[4.3.0]non-5-ene and 10 kg of the petroleum-based oil Viplex 530A (boiling range 320-500°C , liquid at mixing temperature 25°C) were mixed in a 20 liter plastic pail by a blade mixer for 5 minutes at 150 rotations per minute (rpm). The resulting uniform composition was added to 120 kg of rubber crumbs (average particle size 0.5 mm; produced from used rubber tires and cleaned from metal particles) on the Ross mixer (capacity 500 liters; speed 30 rpm) and mixed for 20 minutes. This mixture was loaded into an NRM extruder (screw diameter=4.5 inches). The three heating zones of the extruder had the following temperatures: zone I - 45°C; zone II - 55°C; zone III - 65°C. At the end of the extruder, the mixture exited through a flat hole 1.5 mm thick, which created the resistance necessary for effective shearing.

To study the properties of the resulting devulcanized rubber, it was mixed with powdered sulfur and the activator of vulcanization dibenzothiazoledisulfide (DBTD) at a weight ratio of devulcanized rubber to sulfur to DBTD 100:1:0.5 using mixing rubber rolls (rolls diameter 300 mm, rolls speed ratio 1:1.14). To make test samples, this compounded rubber was vulcanized in an electrical press at 140°C for 15 minutes. The test results are given in Table 1 (P-1).

### Example 2.

The composition for devulcanization of sulfur-cured rubber was made and used exactly as described in Example 1 except that 1,8-diazabicyclo[4.3.0]undec-7-ene was used instead of 1,5-diazabicyclo[4.3.0]non-5-ene.

The resulting devulcanized rubber was tested as described in Example 1. The test results are given in Table 1 (P-2).

### Example 3.

This example illustrates the real effect of the devulcanizing agent.

10 kg of Viplex 530A (without devulcanizing agent) was added to 120 kg of rubber crumbs and extruded as described in Example 1.

The extruded rubber was tested as described in Example 1. The test results are given in Table 1 (P-3).

**Table 1. The characteristics of tested rubbers.**

| Characteristics | P-1 | P-2 | P-3 |
|---|---|---|---|
| Scorching time* 120°C t₅, minutes | 10 | 11 | >25 |
| Modulus at 100% elongation, MPa | 2.42 | 1.98 | 0.86 |
| Tensile strength at break, MPa | 13.1 | 12.8 | 4.8 |
| Elongation at break, % | 340 | 360 | 225 |
| Shore Hardness A ASTM D2240 | 59 | 58 | 53 |
| Rebound resilience ASTM D2632, % | 44 | 41 | 23 |
| Tear resistance ASTM D624, kN/m | 78 | 62 | 18 |

| | | | |
|---|---|---|---|
| *Scorching time was defined as the time necessary for a 5% increase of compounded rubber viscosity at 120°C. | | | |

## Claims

1. A composition for devulcanization of sulfur-cured rubber, containing a devulcanizing agent for selective destruction of sulfide bonds, wherein said devulcanizing agent is a secondary imine, and further containing a compatibilizer compatible with both the secondary imine and the sulfur-cured rubber, at a weight ratio of the secondary imine to the compatibilizer from 1:9 to 1:20.

2. The composition according to claim 1, wherein the secondary imine is selected from the group consisting of 1,5-diazabicyclo[4.3.0]non-5-ene, 1,8-diazabicyclo[4.3.0]undec-7-ene, bis[4-(2-hydroxy-3-methoxy-benzylideneamino)phenyl] ether, N-benzylideneaniline, and N-ethyl-1-phenylmethaneimine.

3. The composition according to claim 1 or 2, wherein the compatibilizer is a product of petroleum distillation with a boiling temperature exceeding 250°C.

4. A method of devulcanization of sulfur-cured rubber that includes the mixing of the composition for devulcanization of rubber according to one of the claims 1-3 with rubber crumbs at a weight ratio of the composition to rubber crumbs from 1:9 to 1:50, followed by extrusion of this mixture at 30-100°C.
